# FASCICULE DE BREVET EUROPEEN

(11) **EP 1 789 258 B1**
(45) Date de publication et mention de la délivrance du brevet: **07.07.2010**
(21) Numéro de dépôt: 05797551.8
(22) Date de dépôt: 10.08.2005
(51) Int. Cl.: B32B 27/08

(54) **PAROI MULTICOUCHES NOTAMMENT DE STRUCTURES GONFLABLES DE TYPE GOSSAMER**
BESONDERS AUS GOSSAMERÄHNLICHEN, AUFBLASBAREN STRUKTUREN BESTEHENDE MEHRSCHICHTWAND
MULTILAYER WALL ESPECIALLY CONSISTING OF GOSSAMER-TYPE INFLATABLE STRUCTURES

(30) Priorité: 24.08.2004 FR 0451894
(43) Date de publication de la demande: 30.05.2007
(73) Titulaire: ASTRIUM SAS, 75016 Paris (FR)
(72) Inventeur: DEFOORT, Brigitte, F-33160 SAINT MEDARD EN JALLES (FR); LACOUR, Dominique, F-33370 TRESSES (FR)
(74) Mandataire: Schmit, Christian Norbert Marie
(86) Numéro de dépôt international: PCT/FR2005/050667
(87) Numéro de publication internationale: WO 2006/024805

(56) Documents cités:
- US-A1- 2004 148 901
- D. CADOGAN, S SCARBOROUGH: "Rigidizable materials for use in gossamer space inflatable structures" AIAA/ASME/ASCE/AHS/ASC STRUCTURES, STRUCTURAL DYNAMICS, AND MATERIALS CONFERENCE, 16 avril 2001 (2001-04-16), - 19 avril 2001 (2001-04-19) XP002323822
- D. CADOGAN, J. LIN, M. GRAHNE: INFLATABLE SOLAR ARRAY TECHNOLOGY AIAA CONFERENCE 99-1075, [Online] 12 mai 1999 (1999-05-12), - 12 mai 1999 (1999-05-12) XP002323820 Extrait de l'Internet: URL:http://www.ilcdover.com/products/aeros pace_defense/supportfiles/aiaareno.pdf> [extrait le 2005-04-08]
- DAVID CADOGAN, STEPHEN SCARBOROUGH: "Inflatable and rigidizable wings for unmanned vehicles" CONFERENCE AIAA 2003-6630, septembre 2003 (2003-09), XP002323821
- EDWARD J. SIMBURGER, THOMAS W. GIANTS, JAMES H. MATSUMOTO: "New - Development, Design, And Testing Of Powersphere Multifunctional Ultraviolet-Rigidizable Inflatable Structures" AIAA 2003-1897, septembre 2003 (2003-09), XP002323823

## Description

La présente invention a trait plus particulièrement aux structures communément appelées Gossamer qui sont des structures spatiales ultralégères déployables.

D'une façon générale, lorsque l'on envoie des objets dans l'espace, on dispose d'une place réduite sous les coiffes des fusées ou dans la soute des navettes. On doit alors compacter ces objets, et on devra les déployer lors de leur arrivée en orbite. L'exemple le plus connu de telles structures est celui des panneaux solaires.

Ces déploiements sont faits aujourd'hui à l'aide de systèmes mécaniques qui peuvent être complexes, compte tenu des conditions difficiles de l'environnement spatial.

Quelle que soit la technologie de déploiement mise en oeuvre, il est fondamental de maîtriser la géométrie de l'objet déployé, car elle est en général un élément clé de son fonctionnement , par exemple quand il s'agit d'antennes radio ou de panneaux solaires.

Une des difficultés rencontrées pour la maîtrise de ce déploiement est liée au vide de l'espace. En effet, les structures sont évidemment assemblées sur terre, à pression atmosphérique, et durant leur transport jusqu'à l'orbite, elles doivent subir une dépressurisation. Cette dépressurisation s'accompagne de flux gazeux susceptibles de déformer les structures ou de perturber leur déploiement, si ces flux ne sont pas contrôlés.

La présente invention vise plus particulièrement les structures dites Gossamer du type à paroi gonflable rigidifiable multi-couches.

Une telle paroi comprend une couche d'un matériau composite rigidifiable constituée d'un tissu préimprégné de type polymerisable, une couche étanche au gaz disposée côté intérieur de la structure multicouche déployable pour permettre son gonflage et, côté extérieur, au moins une couche assurant la protection et évitant à la couche de matériau composite de se coller sur elle-même lors du pliage de la structure pour la loger dans le container qui sera placé dans la fusée ou la navette.

Dans de telles structures, il est primordial de s'assurer qu'aucun gaz résiduel emprisonné lors de la fabrication et/ou du pliage ne subsiste après la dépressurisation. Ceci peut en effet être préjudiciable à un bon déploiement en orbite.

Il faut en effet maîtriser le déploiement pour qu'il se fasse selon la géométrie souhaitée et avec une régularité suffisante tenant compte des systèmes environnants et de la situation en apesanteur.

Le but de l'invention est de permettre, notamment lors de la phase de dépressurisation, l'évacuation de l'air emprisonné entre les différentes couches d'une paroi multi-couches de structures gonflables et rigidifiables de type Gossamer.

A cet effet, l'invention a pour objet une paroi multi-couches, notamment de structures gonflables et rigidifiables de type Gossamer, ladite paroi comprenant une couche de matériau composite rigidifiable par polymérisation, flanquée, côté intérieur, d'une couche étanche aux gaz et, côté extérieur, d'au moins une couche de protection et anti-collage, caractérisée en ce que ladite couche externe est, partiellement, perméable aux gaz et non-perméable aux phases liquide ou visqueuse de la matrice dudit matériau composite.

Suivant un mode de mise en oeuvre, ladite couche externe comporte une ou plusieurs parties perméables aux gaz et non-perméables aux phases liquide ou visqueuse de la matrice dudit matériau composite.

Lesdites parties perméables aux gaz, imperméables aux autres fluides, sont avantageusement formées par des évents constitués par des trous ménagés dans ladite couche et recouverts d'une membrane d'un matériau permettant la libre circulation des gaz tout en empêchant le passage de la phase liquide ou visqueuse de la matrice dudit matériau composite, ladite membrane étant rapportée sur ladite couche externe et solidarisée de cette dernière avec l'aide éventuelle d'un moyen de fixation approprié, la surface cumulée apte aux passages gazeux desdites membranes étant déterminée en sorte d'assurer une dépressurisation rapide de l'intérieur de la paroi multi-couches.

Avantageusement, la membrane est en un matériau non-mouillable par la résine du matériau composite et, de préférence, est une membrane microporeuse en polytétrafluoroéthylène expansé.

Les membranes sont rapportées et fixées par exemple par collage, à l'aide d'un adhésif de type silicone.

A titre d'exemple illustratif, l'épaisseur de la membrane est de l'ordre de quelques centaines de micromètres, typiquement de l'ordre de 300 micromètres.

D'autres caractéristiques et avantages ressortiront de la description qui va suivre de modes de réalisation d'évents selon l'invention, description donnée à titre d'exemple uniquement et en regard du dessin annexé sur lequel :
- Figure 1 est une coupe schématique d'une paroi multi-couches d'une structure gonflable et rigidifiable ;
- Figure 2 représente un mode de réalisation de la paroi multi-couches selon l'invention,
- Figure 3 illustre la disposition d'évents selon l'invention sur une structure pliable, et
- Figure 4 est une courbe de dépressurisation d'une structure multi-couches conforme à l'invention.

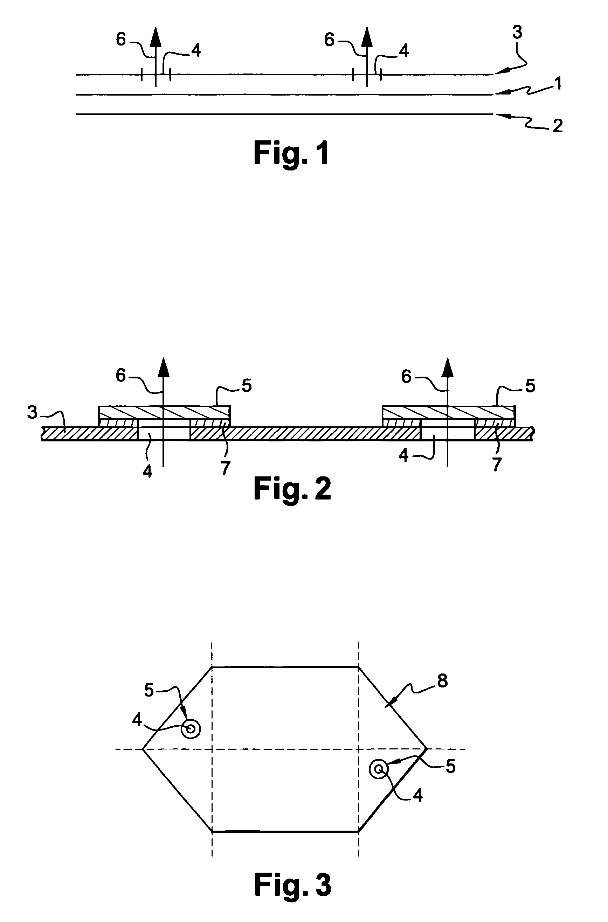

Sur la figure 1, on a représenté schématiquement en coupe une paroi de structure multi-couches d'une structure déployable par gonflage et rigidifiable du type Gossamer.

Cette structure feuilletée comprend une couche centrale 1 en matériau composite formée d'au moins un pli de fibres pré-imprégnées d'une résine appropriée à la rigidification en orbite de la structure une fois déployée. La rigidification s'opère suivant l'une des technologies habituellement utilisées en la circonstance et dont une énumération est faite par exemple dans l'article « Recent advances in rigidization of Gossamer structures » de l'ouvrage ECCOMAS intitulé « Recent Advances in Textile Membranes and Inflatable structures » pages 1-19, Editeur SPRINGER, BERLIN, ALLEMAGNE.

Le matériau composite 1 est revêtu, côté interne de la structure gonflable, d'un film 2 mince et étanche aux gaz par exemple un film de polyimide.

La famille des polyimides est une famille de matériau connus pour leurs propriétés mécaniques élevées et électriques excellentes, leur résistance aux hautes températures, leur faible absorption d'humidité, leur bonne propriété de barrière aux gaz de gonflage et leur stabilité chimique.

Les polyimides aromatiques, notamment le matériau connu sous la dénomination commerciale KAPTON ® , sont particulièrement appropriés à la réalisation du film 2.

Du côté externe de la structure gonflable le matériau composite 1 est recouvert d'un film 3, par exemple également en polyimide (notamment un polyimide aromatique), de protection du matériau composite et évitant le collage de ce dernier sur lui-même lors du pliage de la structure gonflable préalablement à sa mise en place sous un encombrement le plus compact possible dans son container de lancement. Le film 3 participe également à la mise en forme de la structure déployable en constituant en quelque sorte une « matrice de moulage»

La structure multi-couches 1, 2, 3 est maintenue en place lors de sa réalisation et de sa manipulation par le caractère collant de la couche centrale en matériau composite 1.

Lors du déploiement par gonflage de la structure 1, 2, 3, lequel s'opère dans le vide, il est hautement souhaitable pour des raisons de régularité et de précision de déploiement de la structure d'évacuer le plus possible toute présence de bulles de gaz résiduels pouvant subsister dans l'espace entre les deux couches 2 et 3 enveloppant le matériau composite 1, la présence de ces gaz résiduels étant inévitables puisque le sandwich 1, 2, 3 est réalisé et plié à terre.

Conformément à l'invention, la couche externe 3 est munie d'au moins un évent, et de préférence plusieurs, constitués chacun par un trou 4 ménagé dans le film 3 en un endroit déterminé de la surface de ce dernier et recouvert comme illustré par la figure 2 d'une membrane 5 rapportée et fixée sur le film 3.

La forme des trous 4 peut être quelconque, mais la forme ronde est préférée car plus facile et de meilleure tenue mécanique.

Les membranes 5 sont de simples pastilles, par exemple circulaires, de diamètre légèrement supérieur à celui des trous 4.

Les pastilles sont réalisées par exemple par découpe à l'emporte-pièce d'un film mince 3 d'un matériau apte à laisser passer les gaz, comme illustré par les flèches 6 (figure 2) de l'intérieur de l'espace entre les films 2 et 3 vers l'extérieur de la paroi multi-couches.

L'épaisseur des membranes-pastilles 5 est de quelques centaines de micromètres, par exemple de l'ordre de 300 micromètres.

Par contre, le matériau des pastilles 5 ne doit pas permettre la diffusion hors de la paroi multi-couches de la formulation liquide ou visqueuse de la matrice du composite 1, ce qui engendrerait une pollution de la structure déployée.

De préférence, la fixation des membranes-pastilles 5 est réalisée par collage.

Un matériau adapté à la constitution des pastilles 5 est le polytétrafluoroéthylène expansé et tout particulièrement l'un des matériaux commercialisés sous la dénomination MIKROTEX® de la Société MIKROPULL ou sous la dénomination GORE-TEX® de la Société W.L. Gore & Associates et de préférence les matériaux de la série HPM de cette dernière, dont la microporosité convient très bien, les pores n'étant pas obturés par la résine du matériau composite, un tel matériau n'étant pas mouillable par la résine et se prêtant également très bien à un collage sur un matériau de type polyimide à l'aide d'une colle au silicone 7 disposée en anneau à la périphérie de chaque membrane 5.

La section des trous 4 et leur nombre dépendent du débit d'air souhaité, l'objectif étant d'obtenir une dépressurisation rapide de l'ordre de quelques dizaines de seconde.

Quant à la localisation des évents (4,5), il dépend des formes, dimensions et modes de pliage des structures déployables.

En figure 3, à titre d'exemple, est représenté un motif répétitif 8 d'un mode de pliage en accordéon connu d'une structure tubulaire. Dans ce motif 8 hexagonal, il est prévu deux perçages 4 disposés symétriquement, recouverts chacun d'une membrane 5. La position des évents est de préférence optimisée.

C'est ainsi que le nombre des évents est lié au volume de gaz à évacuer.

Quant à la position, on place les évents de façon à limiter le parcours qu'auraient à faire les molécules de gaz, à savoir dans les quatre zones du motif hexagonal 8, et également dans chaque zone « isolée » par le pliage, c'est-à-dire là où les plis peuvent localement rendre étanche le produit, et créer des zones entre lesquelles les gaz ne peuvent pas circuler.

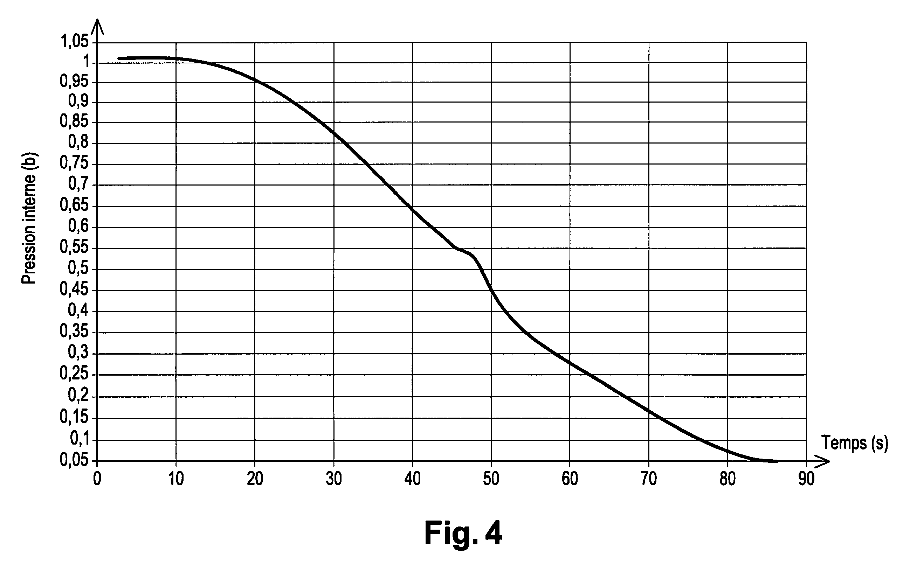

La figure 4 représente un profil de dépressurisation en fonction du temps d'une structure multi-couches selon l'invention.

Dans l'essai ainsi illustré, on obtient une dépressurisation quasi totale, passant de 1 bar à 0,05 bar en un laps de temps de 90 secondes considéré comme tout à fait satisfaisant. On observera que la dépressurisation est non seulement rapide mais relativement régulière, ce qui contribue certainement au déploiement harmonieux de la structure gonflable.

Il est à noter que l'invention peut s'appliquer également à des parois multi-couches, à couche centrale de matériau composite interposée entre deux couches étanches aux gaz, utilisables dans d'autres contextes que la réalisation de structures Gossamer requérant la présence d'un matériau composite sans bulles, l'une au moins des deux couches étanches étant pourvues du dispositif d'évent selon l'invention.

## Revendications

1. Paroi multi-couches notamment de structures gonflables et rigidifiables de type Gossamer, ladite paroi comprenant une couche de matériau composite (1) rigidifiable par polymérisation, flanquée, côté intérieur, d'une couche (2) étanche aux gaz et, côté extérieur, d'au moins une couche (3) de protection et anti-collage, **caractérisée en ce que** ladite couche externe (3) est, partiellement, perméable aux gaz et non-perméable aux phases liquide ou visqueuse de la matrice dudit matériau composite (1).

2. Paroi multi-couches suivant la revendication 1, **caractérisée en ce que** ladite couche externe (3) comporte une ou plusieurs parties (4, 5) perméables aux gaz et non-perméables aux phases liquide ou visqueuse de la matrice dudit matériau composite (1).

3. Paroi multi-couches suivant la revendication 2, **caractérisée en ce que** lesdites parties (4, 5) sont des évents constitués par des trous (4) ménagés dans ladite couche (3) et recouverts d'une membrane (5) d'un matériau permettant la libre circulation (6) des gaz tout en empêchant le passage de la phase liquide ou visqueuse de la matrice dudit matériau composite (1), ladite membrane (5) étant rapportée sur ladite couche externe (3) et solidarisée de cette dernière avec l'aide éventuelle d'un moyen de fixation (7) approprié, la surface cumulée apte aux passages gazeux (6) desdites membranes étant déterminée en sorte d'assurer une dépressurisation rapide de l'intérieur de la paroi multi-couches (1, 2, 3).

4. Paroi multi-couches suivant la revendication 3, **caractérisée en ce que** ladite membrane (5) est en un matériau non-mouillable par la résine du matériau composite (1).

5. Paroi multi-couches suivant la revendication 4, **caractérisée en ce que** ladite membrane (5) est une membrane microporeuse en polytétrafluoréthylène expansé.

6. Paroi multi-couches suivant l'une des revendications 3 à 6, **caractérisée en ce que** ladite couche externe (3) est en polyimide.

7. Paroi multi-couches suivant la revendication 7, **caractérisée en ce que** le polyimide est un polyimide aromatique.

8. Paroi multi-couches suivant l'une des revendications 3 à 9, **caractérisée en ce que** la membrane (5) est fixée par collage.

9. Paroi multi-couches suivant la revendication 10, **caractérisée en ce que** le collage est réalisé à l'aide d'une colle au silicone (7).

10. Paroi multi-couches suivant l'une des revendications 3 à 11, **caractérisée en ce que** la membrane (5) a une épaisseur de l'ordre de quelques centaines de micromètres.

11. Paroi multi-couches suivant la revendication 12, **caractérisée en ce que** la membrane (5) a une épaisseur de l'ordre de 300 micromètres.

## Claims

1. A multi-layer wall, in particular of inflatable and stiffenable structures of the gossamer type, said wall including a layer of composite material (1) stiffenable by polymerisation, flanked, on the inside, by a gastight layer (2) and, on the outside, by at least one non-stick protective layer (3), **characterised in that** said external layer (3) is partially permeable to gas and non-permeable to liquid or viscous phases of the matrix of said composite material (1).

2. A multi-layer wall according to claim 1, **characterised in that** said external layer (3) includes one or more parts (4, 5) permeable to gas and non-permeable to the liquid or viscous phases of the matrix of said composite material (1).

3. A multi-layer wall according to claim 2, **characterised in that** said parts (4, 5) are vents formed by holes (4) provided in said layer (3) and covered with a membrane (5) of a material allowing free circulation (6) of the gases while preventing passage of the liquid or viscous phase of the matrix of said composite material (1), said membrane (5) being attached to said external layer (3) and secured to the latter with the possible help of a suitable fixing means (7), the total surface suitable for the gaseous passages (6) of said membranes being determined so as to ensure a rapid depressurisation of the interior of the multi-layer wall (1, 2, 3).

4. A multi-layer wall according to claim 3, **characterised in that** said membrane (5) is made from a material that is not wettable by the resin of the composite material (1).

5. A multi-layer wall according to claim 4, **characterised in that** said membrane (5) is a microporous membrane made from expanded polytetrafluoroethylene.

6. A multi-layer wall according to one of claims 3 to 5, **characterised in that** said external layer (3) is made from polyimide.

7. A multi-layer wall according to claim 6, **characterised in that** the polyimide is an aromatic polyimide.

8. A multi-layer wall according to one of claims 3 to 7, **characterised in that** the membrane (5) is fixed by adhesive bonding.

9. A multi-layer wall according to claim 8, **characterised in that** the bonding is carried out by means of a silicone adhesive (7).

10. A multi-layer wall according to one of claims 3 to 9, **characterised in that** the membrane (5) has a thickness of around a few hundreds of micrometres.

11. A multi-layer wall according to claim 10, **characterised in that** the membrane (5) has a thickness of around 300 micrometres.

## Patentansprüche

1. Mehrschichtwand, insbesondere aus aufblasbaren und versteifbaren Strukturen des Gossamer-Typs, wobei die Wand eine Schicht aus Verbundwerkstoff (1) umfasst, die durch Polymerisation versteifbar ist und auf der Innenseite von einer gasdichten Schicht (2) und auf der Außenseite von wenigstens einer Schutz- und Antihaftschicht (3) flankiert ist, **dadurch gekennzeichnet, dass** die äußere Schicht (3) für Gase teilweise permeabel ist und für flüssige oder viskose Phasen des Grundstoffs des Verbundwerkstoffs (1) nicht permeabel ist.

2. Mehrschichtwand nach Anspruch 1, **dadurch gekennzeichnet, dass** die äußere Schicht (3) einen oder mehrere Teile (4, 5) aufweist, die für Gase permeabel sind und für flüssige Phasen oder viskose Phasen des Grundstoffs des Verbundwerkstoffs (1) nicht permeabel sind.

3. Mehrschichtwand nach Anspruch 2, **dadurch gekennzeichnet, dass** die Teile (4, 5) Öffnungen sind, die durch Löcher (4) gebildet sind, die in der Schicht (3) ausgespart und durch eine Membran (5) aus einem Material, das die freie Zirkulation (6) der Gase ermöglicht und dabei den Durchgang der flüssigen oder viskosen Phase des Grundstoffs des Verbundwerkstoffs (1) verhindert, abgedeckt sind, wobei die Membran (5) auf die äußere Schicht (3) aufgebracht und mit dieser eventuell mit Hilfe eines geeigneten Befestigungsmittels (7) fest verbunden ist, wobei die kumulierte Oberfläche, die für Gasdurchgänge (6) der Membranen geeignet ist, in der Weise bestimmt ist, dass eine schnelle Druckentlastung des Innenraums der Mehrschichtwand (1, 2, 3) gewährleistet ist.

4. Mehrschichtwand nach Anspruch 3, **dadurch gekennzeichnet, dass** die Membran (5) aus einem Material besteht, das mit dem Harz des Verbundwerkstoffs (1) nicht benetzbar ist.

5. Mehrschichtwand nach Anspruch 4, **dadurch gekennzeichnet, dass** die Membran (5) eine mikroporöse Membran aus expandiertem Polytetrafluorethylen ist.

6. Mehrschichtwand nach einem der Ansprüche 3 bis 6, **dadurch gekennzeichnet, dass** die äußere Schicht (3) aus Polyimid besteht.

7. Mehrschichtwand nach Anspruch 7, **dadurch gekennzeichnet, dass** das Polyimid ein aromatisches Polyimid ist.

8. Mehrschichtwand nach einem der Ansprüche 3 bis 9, **dadurch gekennzeichnet, dass** die Membran (5) durch Kleben fixiert ist.

9. Mehrschichtwand nach Anspruch 10, **dadurch gekennzeichnet, dass** das Kleben mit Hilfe eines Silikonklebstoffs (7) verwirklicht ist.

10. Mehrschichtwand nach einem der Ansprüche 3 bis 11, **dadurch gekennzeichnet, dass** die Membran (5) eine Dicke in der Größenordnung von einigen hundert Mikrometern hat.

11. Mehrschichtwand nach Anspruch 12, **dadurch gekennzeichnet, dass** die Membran (5) eine Dicke in der Größenordnung von 300 Mikrometern hat.
